# EUROPÄISCHE PATENTSCHRIFT

(11) **EP 0 512 431 B1**
(45) Veröffentlichungstag und Bekanntmachung des Hinweises auf die Patenterteilung: **18.12.1996**
(21) Anmeldenummer: 92107436.5
(22) Anmeldetag: 30.04.1992
(51) Int. Cl.: B29C 51/00, B29C 70/24, B29D 24/00, B29B 15/10

(54) **Verfahren zur Herstellung eines dreidimensional verformten Textilmaterials und seine Verwendung**
Method for producing a three-dimensionally shaped textile material and its use
Procédé pour fabriquer un matériau textile déformé tridimensionnellement et son utilisation

(30) Priorität: 04.05.1991 DE 4114571
(43) Veröffentlichungstag der Anmeldung: 11.11.1992
(73) Patentinhaber: HOECHST AKTIENGESELLSCHAFT, 65926 Frankfurt am Main (DE)
(72) Erfinder: Disselbeck, Dieter, W-6232 Bad Soden am Taunus (DE); Gebauer, Elke, W-8903 Bobingen (DE)

(56) Entgegenhaltungen:
- EP-A- 0 324 714
- DE-A- 3 614 533

## Beschreibung

Die vorliegende Erfindung betrifft ein Verfahren zur Herstellung eines formstabilen, dreidimensional verformten, flächenförmigen Textilmaterials, die nach diesem Verfahren erhaltenen verformten Gebilde sowie deren Verwendung als Kernmaterial bei der Herstellung von flächenförmigen Sandwichkörpern.

Flächenförmige Sandwichkörper aus einem Kern und zwei Deckschichten, deren Kern formstabile, dreidimensional verformte Textilmaterialien aufweist, sind bereits z.B. aus der FR-A-23 25 503 und der EP-A-1S8 234 bekannt. Das in diesen Druckschriften beschriebene Sandwichmaterial hat einen Kern aus einem drei dimensional verformten, flächenförmigen Textilmaterial, welches auf einer Basisfläche in regelmäßiger Anordnung eine Vielzahl von Erhebungen mit gleicher Höhe und flachem Plateau aufweist. Erhebliche Unterschiede zwischen den aus der FR-A-23 25 503 und der EP-A-158 234 bekannten Kernmaterialien bestehen bezüglich ihrer Struktur. Während die aus FR-A-23 25 503 bekannten Materialien eine im wesentlichen vollständig geschlossene Struktur zeigen, bei der sowohl die textilen Grundflächen als auch die Wandungen der auf der Grundfläche verteilten Erhebungen, eine massive, porenfreie, faserdurchzogene Harzmasse bilden, stellen die aus der EP-A 158 234 bekannten Kernmaterialien eine Netzwerkstruktur aus harzimprägnierten Fäden mit offenen Maschen dar.

Die Herstellung des aus der FR-A-2 325 503 bekannten Kernmaterials mit geschlossener Struktur erfolgt durch Pressen eines harzgetränkten Stapelfasergeleges in eine Preßform der gewünschten geometrischen Gestalt. Dabei wird, bezogen auf das Fasergewicht, eine relativ hohe Harzmenge eingesetzt, so daß sich nach dem Pressen ein im wesentlichen faserverstärkter Harzformkörper ergibt.

Das so erhaltene Kernmaterial hat ein relativ hohes Gewicht. Es gestattet keinen Gasaustausch und es zeigt eine geringe Flexibilität.
Aus der DE-A-36 14 533 ist ein kompakter Formkörper bekannt, der aus einem durch Zusammenpressen eines Faservlieses, das aus einem Anteil thermoplastischer schmelzbarer Fasern und einem Anteil nicht schmelzbarer oder deutlich höher schmelzender Fasern besteht, bei einer Temperatur, bei der die schmelzbaren Fasern schmelzen. Bei diesem Preßvorgang wird ein kompakter Körper erhalten bestehend aus einer porenfreien Thermoplastmatrix, in die die nicht oder höher schmelzenden Fasern eingebettet sind. Diese Druckschrift gibt keine Anregung, ein erfindungsgemäßes filigranartiges Netzwerk, z.B. durch Tiefziehen, herzustellen.

Das aus der EP-A-158 234 bekannte netzstrukturierte (im folgenden auch filigranstrukturierte genannt) Kernmaterial wird hergestellt durch Tiefziehen eines mit Harz imprägnierten, tiefziehfähigen Textilmaterials wie z.B. einer harzimprägnierten Maschenware (Gewirke, Gestrick). Dieses aus der EP-A-158 234 bekannte Kernmaterial hat bei guter mechanischer Stabilität ein niedriges Raumgewicht. Es gestattet einen freien Gasaustausch zwischen den Seiten der Fläche und es weist eine hohe Flexibilität auf.

Wie oben bereits ausgeführt, erfolgt die Herstellung des aus der EP-A-158 234 bekannten Kernmaterials durch Imprägnieren eines flächenförmigen Textilmaterials mit einem duroplastischen Harz, Trocknen des imprägnierten Materials zu einem sogenannten Prepreg und anschließende Verformung des Prepregs zur gewünschten Form des Kernmaterials durch einen Tiefziehprozeß.

Ein gravierender Nachteil dieses Herstellungsverfahrens besteht darin, daß es schwierig ist, ein tiefziehfähiges flächenförmiges Textilmaterial gleichmäßig mit einem Harz zu imprägnieren, ohne daß es dabei zu einer ganzen oder partiellen Vordehnung des Materials kommt. Ein derartiger, gegebenenfalls ungleichmäßiger, Verzug der textilen Fläche hat eine mangelnde Tiefziehfähigkeit und im Fertigprodukt eine, gegebenenfalls partielle, Reduktion der Faserfestigkeit zur Folge. Auch die Handhabung des noch nichtvorkondensierten, mit Harz imprägnierten, tiefziehfähigen Textilmaterials kann leicht zu einer partiellen Vordehnung dieses Materials führen, mit den oben erwähnten Nachteilen für die Gleichmäßigkeit der Qualität des Endproduktes, wenn nicht besondere Vorsichtsmaßnahmen getroffen werden. Ein weiterer Nachteil dieses bekannten Kernmaterials besteht darin, daß es nicht problemlos recyclisierbar ist. Die Herstellungs- und Recyclisierungsprobleme stehen bis zu einem gewissen Grad der weiten Verbreitung dieser an sich überaus günstigen Kernmaterialien im Wege. Die vorliegende Erfindung überwindet den Nachteil dieses bekannten Kernmaterials und seines Herstellungsverfahrens.

Die vorliegende Erfindung betrifft ein Verfahren zur Herstellung eines formstabilen, dreidimensional verformten, flächenförmigen Textilmaterials, das dadurch gekennzeichnet ist, daß eine oder mehrere Schichten eines aus Garnen gefertigten, tiefziehfähigen Textilmaterials, das Verstärkungsfasern und ein bei tieferer Temperatur als die Verstärkungsfasern schmelzendes thermoplastisches Matrixmaterial in Faserform enthält, übereinander gestapelt werden, der Stapel bei einer Temperatur, bei der das faserförmige thermoplastische Matrixmaterial schmilzt, durch einen unter Flächenvergrößerung ablaufenden Formprozeß, z.B. durch Tiefziehen, in die für das Kernmaterial gewünschte Form gebracht wird, danach die Temperatur wieder unter den Schmelzpunkt des thermoplastischen Matrixmaterials abgesenkt wird und das verformte Material noch solange in der Form gehalten wird, bis das thermoplastische Matrixmaterial hinreichend erhärtet ist und anschließend das so erhaltene verformte Textilmaterial dem Formwerkzeug entnommen wird.

Der Begriff "hinreichend erhärtet" so zu verstehen ist, daß das Matrixmaterial in diesem Zustand in der Lage ist, das verformte Flächengebilde nach dem Öffnen des Tiefziehwerkzeuges in der gewünschten Form zu stabilisieren.

Das so hergestellte verformte Textilmaterial ist dadurch gekennzeichnet, daß es aus einem porösen Netzwerk eines Faserverbundwerkstoffes besteht.
Das poröse Netzwerk besteht, wie ein Fischernetz, aus einer Vielzahl von miteinander überkreuzend verbundenen Stegen des Faserverbundwerkstoffs, zwischen denen offene Zwischenräume vorhanden sind.
Der Faserverbundwerkstoff besteht aus dem in das Matrixmaterial eingebetteten Verstärkungsgarn.

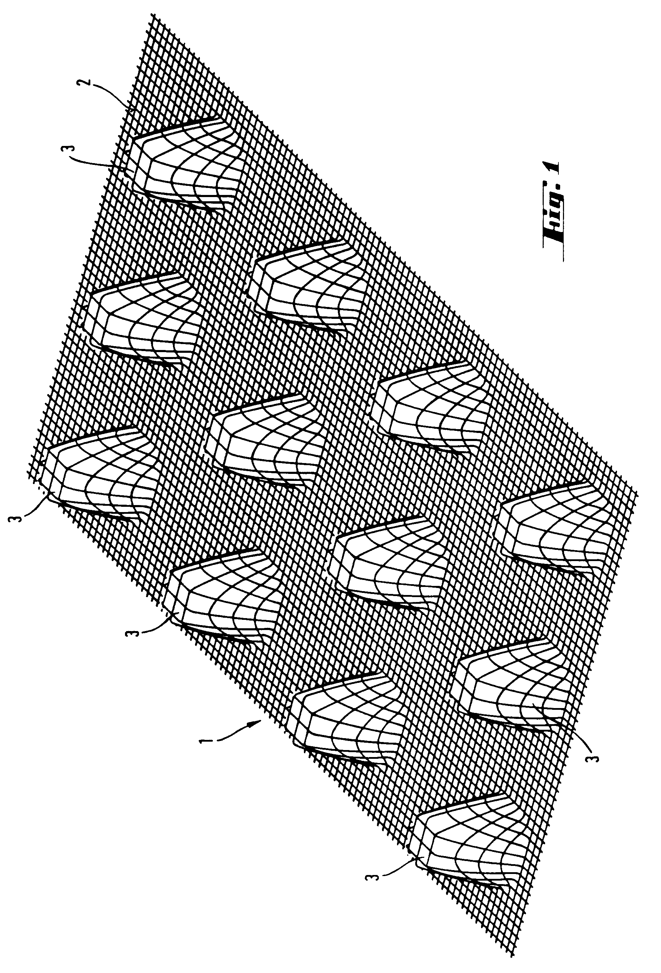

Die Figur 1 veranschaulicht schematisch ein erfindungsgemäß hergestelltes formstabiles, dreidimensional verformtes, beharztes flächenförmiges Textilmaterial (1), das auf einer Grundfläche (2) eine Vielzahl von Erhebungen (3) aufweist. Insbesondere in den Erhebungen zeigt die Figur eine durch die Dehnung des Grundmaterials erhaltene netzartige Filigranstruktur.

Je nach den zur Verfügung stehenden Anlagen zur erfindungsgemäßen Herstellung des Kernmaterials, insbesondere der Genauigkeit der Temperaturführung, werden die Materialien für Verstärkungs- und Matrixfasern so gewählt, daß der Schmelzpunkt des Materials der Verstärkungsfasern mindestens 10°C, vorzugsweise mindestens 30°C über dem Schmelzpunkt des Matrixmaterials liegt.

Das Gewichtsverhältnis von Verstärkungsfasern zu Matrixfasern beträgt 20:80 bis 80:20, vorzugsweise 40:60 bis 60:40. Es wird im Einzelfall so gewählt, daß bei der Verformung des Textilmaterials eine einwandfreie Öffnung der Zwischenfadenräume zu dem gewünschten porösen Netzwerk gewährleistet ist.
Eine weitere Bemessungsvorschrift für das Gewichtsverhältnis von Verstärkungs-und Matrixfasern ergibt sich aus den Festigkeitsanforderungen an das dreidimensional verformte Textilmaterial. Bei seinem Einsatz als Kernmaterial für Sandwichformteile muß es eine bestimmte Mindestdruckfestigkeit aufweisen.

Das tiefziehfähige textile Flächengebilde kann ein Gewebe aus dehnbaren, z.B. gekräuselten oder niedrigverstreckten Garnen hergestelltes Gewebe sein.
Vorzugsweise aber ist das textile Flächengebilde eine Maschenware, z.B. ein Gewirke oder Gestrick, welches aufgrund seiner Garnanordnung eine besonders hohe Dehnbarkeit aufweist.

Es ist auch bereits vorgeschlagen worden, tiefziehfähige textile Flächengebilde aus Umwindegarnen herzustellen, die aus einem fadenförmigen Kernmaterial bestehen, welches von einem Hüllfaden umwunden wird, der 1,5- bis 3-mal, vorzugsweise 1,8-bis 2,2-mal länger ist als das Kernmaterial. Ein flächenförmiges Textilmaterial aus einem derartigen Umwindegarn kann in Form eines Gewebes, eines Gewirkes oder einer Strickware vorliegen. Beim Tiefziehen eines solchen Materials werden die Kernfäden in den zu verformenden Bereichen statistisch verteilt zerrissen und geben dabei eine entsprechende Länge des Hüllfadens frei. Dieser Mechanismus ermöglicht im Verlauf des Tiefziehvorganges eine erhebliche Flächenvergrößerung ohne Zerstörung des gesamten Flächenzusammenhalts. Besonders bevorzugt dabei ist die Verwendung eines Umwindegarns, dessen Kernfäden eine niedrigere Stabilität haben als die Hüllfilamente, d.h. daß der Kernfaden bei der beim Tiefziehen auftretenden mechanischen und gegebenenfalls auch thermischen Belastung und/oder durch den Einfluß von Chemikalien zerstört wird, während der Hüllfaden gestreckt wird und die tragende Funktion im Flächengebilde übernimmt.

Als tiefziehfähige Textilmaterialien kommen weiterhin solche in Betracht, die eine hohe, nicht-elastische Verformbarkeit aufweisen, wie sie z.B. aus der GB-A- 2 176 511 sowie den Derwent Referaten 87-025859/04 und 87-040235/06 der Japanischen Patentpublikationen 61-282452 und 61-296152 bekannt sind. Diese bekannten dreidimensional verformbaren Textilmaterialien werden hergestellt, indem man entsprechende flächenförmige Textilmaterialien aus Synthesefasern einer Wärmeschrumpfbehandlung unterwirft und ihnen dadurch eine nicht-elastische Dehnbarkeit vermittelt, oder indem man diese Textilmaterialien von vornherein aus Garnen erzeugt, die bereits eine nicht-elastische Dehnbarkeit mitbringen. Nicht-elastisch dehnbare Garne sind beispielsweise beschrieben in der DE-A-28 21 243 und der DEC- 35 21 469.

Die in dem tiefziehfähigen Textilmaterial enthaltenen Garne können als Verstärkungsfasern Spinnfasern oder texturierte oder nicht texturierte Endlosfasern enthalten.
Spinnfasergarne werden durch Sekundärspinnen aus relativ kurzen Filamentabschnitten, wie sie in Naturfasern oder in synthetischen Stapelfasern vorliegen, hergestellt.
Endlosfasergarne bestehen aus endlosen synthetischen (z.B. Polyester) oder halbsynthetischen (z.B. Regeneratzellulose) Filamenten.
Die Garne können texturiert sein, d.h. sie können eine mehr oder weniger stark ausgeprägte Kräuselung aufweisen und sie können ungezwirnt oder gezwirnt sein.

Die Verstärkungsfasern können aus einem anorganischen Material wie z.B. aus Glasfasern, Steinfasern, Keramikfasern oder Kohlenstoffasern oder aus einem organischen, spinnfähigen Material bestehen.
Verstärkungsfasern aus organischen Material können aus natürlichen Fasern, z.B. Zellulosefasern wie Baumwolle-, Jute-, Flachs- oder Hanffasern, oder Eiweisfasern z.B. Wolle oder Seide bestehen.
Bevorzugt sind als organische Fasern jedoch Synthesefasern oder halbsynthetische Fasern weil deren Eigenschaften in bekannter Weise sehr gut auf den geplanten Einsatzzweck abgestimmt werden können.

Bevorzugte Materialien für die Verstärkungsfasern sind daher neben den anorganischen Materialien Glas oder Kohlenstoff synthetische Polymere wie Polyolefine insbesondere Polyethylen und Polypropylen, teil- oder vollaromatische Polyester, aliphatische oder aromatische Polyamide, Polyetherketone, Polyetheretherketone, Polyethersulfone, Polysulfone, Polyacrylnitril, Polyphenylensulfid oder Polyetherimide.
Eine Übersicht mit weiteren zahlreichen Literaturzitaten findet sich in Ullmann's Encyclopedia of Industrial Chemistry, 5.Auflage, Band A13, Seite 1 ff.(High-Performance Fibres).

Aus Gründen einer besonders günstigen Kosten-Nutzen-Relation bestehen z.Zt. besonders bevorzugte Verstärkungsfasern aus Polyacrylnitril oder aus Polyestern, insbesondere auf Basis von Terephthalsäure und Ethylenglycol. Diese Polyester können neben den genannten Grundbausteinen weitere, ihre Eigenschaften modifizierende Dicarbonsäure- und/oder Diolbausteine, wie z.B. Reste der Isophthalsäure, aliphatischer Dicarbonsäuren mit in der Regel 6-10 Kohlenstoffatomen, der Sulfoisophthalsäure, Reste von längerkettigen Diolen mit in der Regel 3 bis 8 Kohlenstoffatomen, Etherdiolen, z.B. Diglycol- oder Triglycolreste oder auch geringe Anteile von Polyglycolresten enthalten. Diese modifizierenden Komponenten sind in der Regel zu nicht mehr als 15 Mol% in die Polyester einkondensiert. Besonders bevorzugt sind Verstärkungsgarne aus Polyethylenterephthalat mit einem Gehalt von unter 5 Mol% modifizierender Komponenten, insbesondere aus reinem unmodifizierten Polyethylenterephthalat oder Polybutylenterephthalat.

Besonders geeignet sind hier naturgemäß die für technische Zwecke produzierten hochfesten Polyacrylnitril- und Polyethylenterephthalat-Fasertypen wie z.B. die handelsüblichen (R)DOLANIT- oder (R)TREVIRA HOCHFEST - Typen der Firma Hoechst AG.

Das tiefziehfähige textile Flächengebilde enthält, wie oben beschrieben, das faserförmige Matrixmaterial in den ebenfalls oben angegebenen Mengen. dieses kann, wie die Verstärkungsfasern, als Stapel- oder Endlosfasern vorliegen.
Die Matrixfasern können in unterschiedlicher Weise in das tiefziehfähige Textilmaterial inkorporiert sein.
Das textile Flächengebilde kann aus einem Mischgarn aus Matrix- und Verstärkungsfasern (sog. commingled yarn) hergestellt werden, oder Garne aus Thermoplastfasern und Garne aus nichtschmelzenden oder höherschmelzenden Verstärkungsfasern können bei der Herstellung des Flächengebildes in an sich bekannter Weise gemeisam verwebt (sog. coweaving-process) oder gewirkt werden. Eine weitere Möglichkeit zur Herstellung eines textilen Flächengebildes, das ein thermoplastisches Matrixmaterial in Faserform (im Sinne dieser Erfindung umfaßt der Begriff "Fasern" sowohl Endlosfasern als auch Stapelfasern) enthält, besteht darin, daß ein Garn eingesetzt wird, daß ganz oder teilweise aus Bikomponentenfasern besteht, die aus einem höherschmelzenden und einem niedriger schmelzenden Polymermatrial zusammengesetzt sind. In diesen Bikomponentenfasern können die Polymerkomponenten in einer Seite-an-Seite-Anordnung oder in konzentrischer Kern-Mantel-Anordnung vorliegen.

Thermoplastische Matrixmaterialien im Sinne dieser Erfindung sind alle hochmolekularen spinnfähigen Substanzen, insbesondere unzersetzt schmelzbaren organischen Polymerisate oder Polykondensate, deren mechanische Festigkeit ausreicht, um ihnen Formbeständigkeit zu verleihen.

Je nach dem Schmelzpunkt des eingesetzten Verstärkungsgarns und dem beabsichtigten Anwendungszweck wählt man aus der Vielzahl der zur Verfügung stehenden Thermoplasten eines mit einem geeigneten Schmelz- bzw. Erweichungspunkt. Zweckmäßigerweise hat das organische Polymerisat oder Polykondensat der Thermoplastmatrix einen Schmelzpunkt von 100 bis 350°C.

Als Grundstoffe für eine Thermoplastmatrix eigenen sich Polymerisate wie gegebenenfalls substituiertes Polyalkylen, beispielsweise Polyethylen, Polypropylen oder Polyvinylchlorid, vorzugsweise in ihren hochfesten Ausführungen.
Besonders geeignet wegen der vielfachen Modifizierbarkeit ihrer Zusammensetzung und Eigenschaften sind als Matrixharze Polykondensate, und zwar insbesondere teil-oder vollaromatische Polyester, aliphatische oder aromatische Polyamide, Polyetherketone, Polyetheretherketone, Polyethersulfone, Polysulfone, Polyphenylensulfid oder Polyetherimid.
Die Herstellung, die Verarbeitung und die Eigenschaften dieser thermoplastischen Matrixharze ist dem Fachmann bekannt. Sie sind in der einschlägigen Literatur beschrieben und in vielen Typen mit einer breiten Palette von Spezifikationen im Handel erhältlich. Eine Übersicht mit weiteren zahlreichen Literaturzitaten findet sich in Ullmann's Encyclopedia of Industrial Chemistry, 5.Auflage, Band A7, Seite 369 ff.(Composite Materials) sowie Band A13, Seite 1 ff.(High- Performance Fibres).

Einige Beispiele für geeignete Kombinationen für den in den erfindungsgemäßen Kern-Material enthaltenen Faserverbundwerkstoff sind:(Reihenfolge: Faser/Matrix)
Polyethylenterephthalat/Polybutylenterephthalat,
Glas/Polyethylen oder Polypropylen,
Glas/Polyetherimid
Kohlenstoffaser/Polyetherketon,
Aromatisches Polyamid(Aramid)/Polyethylenterephthalat,
Polyacrylnitril/Polyethylenterephthalat.

Besonders bevorzugte Textilmaterialien bestehen vorzugsweise aus Gestricken aus einem Mischgarn aus hochfesten Polyacrylnitril- oder Polyesterfasern und Matrixfasern aus einem modifizierten Polyester oder aus Polybutylenterephthalat.

Der Anteil der Matrixfasern in dem erfindungsgemäß zu verformenden Textilmaterial wird so bemessen, daß das Textilmaterial im gedehnten Zustand ein filigranartiges Netzwerk bildet.
Wie oben bereits gesagt, wird diese Forderung in der Regel dann erfüllt, wenn das Verhältnis der Gewichte von Verstärkungsfasern und Matrixfasern im Bereich von 20:80 bis 80:20, vorzugsweise von 40:60 bis 60:40 liegt.

Bei Einsatz spezieller Techniken bei der Herstellung von Sandwichformkörpern kann es jedoch auch durchaus ausreichen, weniger Harz bezogen auf das Textilmaterial einzusetzen, so daß die Matrix nicht das gesamte Fasermaterial einschließt, daß aber die Formstabilität des verformten Textilmaterials gewährleistet ist. Derartige, mit geringer Matrixmenge hergestellten Formkörper können durch Verkleben mit Deckschichten zu hochfesten Sandwichkörpern verarbeitet werden, wenn die Formkörper mit einem flüssigen oder pastösen Klebstoff verklebt werden und zuvor mit einer Flüssigkeit benetzt werden, die zudem als Lösungsmittel und/oder Benetzungsmittel für den Klebstoff dient. Hierbei ist zu beobachten, daß der Klebstoff in dem Gitterwerk der netzstrukturierten Formkörper aufsteigt und diese nach dem Aushärten zusätzlich verstärkt. Ohne die Benetzung steigt der Klebstoff nicht an der Wandung empor. Auch durch die Verwendung von hydrophilen Spezialhärtern, die dem Fachmann geläufig sind, läßt sich auf diese Weise eine Steigerung der Druck-und Scherfestigkeit der Sandwichkörper erzielen.

Für spezielle Anwendungen können auch Stapel aus mehreren Lagen eines tiefziehfähigen Textilmaterials oder aus Lagen unterschiedlicher Textilmaterialien eingesetzt werden. So ist es möglich, zwischen mindestens 2 Lagen der oben beschriebenen tiefziehfähigen Textilmaterialien auch z.B. Vliese einzulegen.
Weiterhin ist es möglich, das Verstärkungsfaser-Material der textilen Flächengebilde zu variieren, beispielsweise können auch Kombinationen von Textilbahnen aus organischen und anorganischen Fasern, wie z.B. Glasfasern, verwendet werden.
Der Stapel wird in einer Tiefziehform auf eine solche Temperatur erwärmt, bei der das Matrixmaterial fließfähig wird, dann in die gewünschte dreidimensionale Form gezogen, und bei einer Temperatur, bei der das Matrixmaterial erhärten kann, so lange in dieser Form gehalten, bis der Härtungsprozeß ganz oder zumindest soweit abgeschlossen ist, daß das tiefgezogene Material formstabil bleibt.
In der Fließphase umhüllt das verflüssigte Matrixmaterial die Verstärkungsfasern des textilen Flächengebildes.

Besonders bevorzugte Ausführungsformen des erfindungsgemäßen Verfahrens sind solche, in denen mehrere der oben genannten bevorzugten Merkmale realisiert werden.

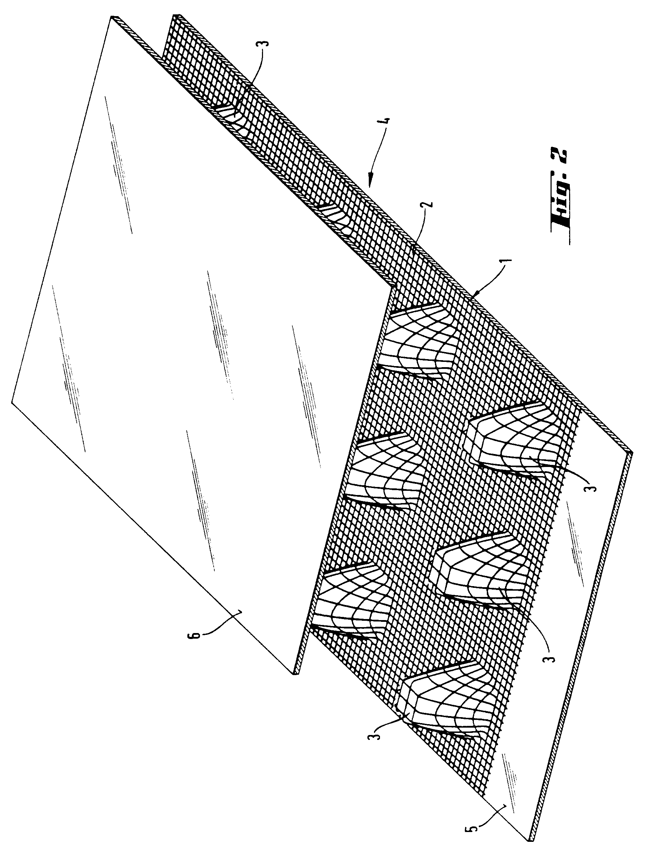

Das erfindungsgemäß hergestellte dreidimensional verformte Textilmaterial kann in an sich bekannter Weise, wie sie z.B. im Europäischen Patent Nr. 158 234 detailliert beschrieben worden ist, zur Herstellung von Sandwichkörpern verwendet werden. Dabei können eine oder mehrere Schichten des dreidimenslonal verformten Materials als Kern für die Sandwichstruktur eingesetzt werden, wobei die Kernlagen entweder übereinander liegend oder - wie in der genannten Druckschrift beschrieben - ineinandergreifend angeordnet werden können. Zur Herstellung der Sandwichstruktur wird in an sich bekannter Weise das Kernmaterial beidseitig mit relativ dünnen festen Deckschichten versehen. Die Befestigung der Deckschichten am Kernmaterial erfolgt üblicherweise durch geeignete bekannte Kleber, insbesondere durch vernetzende Polymerisatkleber. Die Figur 2 veranschaulicht eine Ausführungsform eines solchen Sandwichkörpers (4). Sie zeigt in schräger Aufsicht ein solches Material mit einer unteren Deckschicht (5), einer teilweise entfernten oberen Deckschicht (6) und dem zwischen den Deckschichten als Kern eingeklebten, erfindungsgemäß hergestellten, formstabilen dreidimensional verformten Textilmaterial (1).

Als Deckschichten für die herstellbaren Sandwichformkörper eignen sich alle auch bisher für Sandwichkonstruktionen verwendeten Außenplatten, wie beispielsweise Aluminium- oder Stahlbleche, insbesondere aber Kunstharzlaminate mit Einlagen, beispielsweise aus Geweben, aus Kohlenstoff- oder Glasfäden. In einfacheren Fällen eignen sich als Deckschichten beispielsweise aber auch Sperrholz oder - Hartfaserplatten. Zur Herstellung wird zwischen den beiden, auf den Innenseiten mit dem Klebematerial versehenen Deckschichten das erf indungsgemäß hergestellte Kernmaterial angeordnet, und der so erhaltene Sandwich unter leichtem Druck, gegebenenfalls bei erhöhter Temperatur, verklebt.

Das folgende Ausführungsbeispiel dient zur Veranschaulichung des erfindungsgemäßen Verfahrens.

### Beispiel:

Je ein Faden R-Glas-Multifilament dtex 340 und Polyetherimid-Multifilament dtex 380 f 48 werden mit Luft zu einem Hybridgarn dtex 720 verwirbelt. Aus dem Hybridgarn mit mit einem Volumenanteil von ca. 30 % Glas und ca. 70 % Polyetherimid wird eine dichte, aber dehnfähige Strickware mit einem Flächengewicht von 200 g/m² hergestellt.
Diese textile Fläche wird in ein auf 320°C vorgewärmtes Tiefziehwerkzeug eingelegt. Die Ziehplatte des Werkzeugs weist ein quadratisches Muster von runden Löchern mit 1,5 cm Durchmesser und einen Mittelpunktsabstand von 2,2 cm und einen Zugstempel mit einer quadratischen Anordnung von 2 cm hohen runden Stempeln von 1 cm Durchmesser und einem Mittelpunktsabstand von 2,2 cm auf, wobei die Stempel bezüglich der Löcher zentriert sind.

Das Werkzeug wird bei einer Arbeitstemperatur von 320°C geschlossen und 3 Minuten bei dieser Temperatur gehalten.

Anschließend wird die geschlossene Tiefziehform auf Raumtemperatur abgekühlt und das erhaltene dreidimensional verformte Material entnommen.

Das so hergestellte, tiefgezogene Textilmaterial weist auf einer Grundfläche eine regelmäßige Anordnung einer Vielzahl fingerhutähnlicher, ca. 2 cm hoher Erhebungen mit flachem Plateau im Abstandvon 2,2 cm auf und zeigt durchgehend eine offene Filigranstruktur. Es ist hervorragend als Kernmaterial zur Herstellung von flächenförmigen Sandwichkörpern geeignet. Eine unter Einsatz dieses verformten Textilmaterials als Kern und zweier 1,5 mm starker Sperrholzplatten als Deckschichten hergestellte Sandwichplatte weist eine Druckfestigkeit von 0,4 N/mm² auf.

## Patentansprüche

1. Verfahren zur Herstellung eines formstabilen, dreidimensional verformten, flächenförmigen Textilmaterials, durch Erhitzen eines Fasermaterials, das Verstärkungsfasern und bei tieferer Temperatur als die Verstärkungsfasern schmelzende thermoplastische Matrixfasern enthält, auf eine Temperatur, bei der das faserförmige thermoplastische Matrixmaterial schmilzt, dadurch gekennzeichnet, daß eine oder mehrere Schichten eines aus Garnen gefertigten, tiefziehfähigen Textilmaterials, das Verstärkungsfasern und ein bei tieferer Temperatur als die Verstärkungsfasern schmelzendes thermoplastisches Matrixmaterial in Faserform enthält, übereinander gestapelt werden, der Stapel bei einer Temperatur, bei der das faserförmige thermoplastische Matrixmaterial schmilzt, durch einen unter Flächenvergrößerung ablaufenden Formprozeß in die für das Kernmaterial gewünschte Form gebracht wird, so daß es aus einem porösen Netzwerk eines Faserverbundwerkstoffs besteht, danach die Temperatur wieder unter den Schmelzpunkt des thermoplastischen Matrixmaterials abgesenkt wird und das verformte Material noch solange in der Form gehalten wird, bis das thermoplastische Matrixmaterial hinreichend erhärtet ist und anschließend das so erhaltene verformte Textilmaterial (1) dem Formwerkzeug entnommen wird.

2. Verfahren gemäß Anspruch 1, dadurch gekennzeichnet, daß das tiefziehfähige Textilmaterial eine hohe elastische Dehnbarkeit aufweist.

3. Verfahren gemäß mindestens einem der Ansprüche 1 und 2, dadurch gekennzeichnet, daß das tiefziehfähige Textilmaterial eine Maschenware ist.

4. Verfahren gemäß mindestens einem der Ansprüche 1 bis 3, dadurch gekennzeichnet, daß das tiefziehfähige Textilmaterial aus einem Mischgarn aus Matrix- und Verstärkungsfasern hergestellt ist.

5. Verfahren gemäß mindestens einem der Ansprüche 1 bis 4, dadurch gekennzeichnet, daß das tiefziehfähige Textilmaterial aus Bikomponentenfasern besteht, die aus einem höherschmelzenden und einem niedriger schmelzenden Polymermatrial zusammengesetzt sind, wobei die Polymerkomponenten in einer Seite-an-Seite-Anordnung oder in konzentrischer Kern-Mantel-Anordnung vorliegen können.

6. Verfahren gemäß mindestens einem der Ansprüche 1 bis 5, dadurch gekennzeichnet, daß das tiefziehfähige Textilmaterial aus Garnen aus Thermoplastfasern und Garnen aus nichtschmelzenden oder höherschmelzenden Verstärkungsfasern besteht, die in an sich bekannter Weise gemeisam verwebt oder gewirkt worden sind.

7. Verfahren gemäß mindestens einem der Ansprüche 1 bis 6, dadurch gekennzeichnet, daß der Schmelzpunksunterschied zwischen den Verstärkungsfasern und den Matrixfasern mindestens 10°C, vorzugsweise mindestens 30°C beträgt.

8. Verfahren gemäß mindestens einem der Ansprüche 1 bis 7, dadurch gekennzeichnet, daß die Verstärkungsfasern und die Matrixfasern aus Polyestern mit unterschiedlichen Schmelzpunkten bestehen.

9. Das nach dem Verfahren des Anspruchs 1 hergestellte formstabile dreidimensional verformte flächenförmige Textilmaterial, dadurch gekennzeichnet, daß es aus einem porösen Netzwerk eines Faserverbundwerkstoffs besteht.

10. Verwendung des nach dem Verfahren des Anspruchs 1 hergestellten formstabilen, dreidimensional verformten, flächenförmigen Textilmaterials zur Herstellung von flächenförmigen Sandwichkörpern.

## Claims

1. A process for manufacturing a dimensionally stable, three-dimensionally shaped, sheetlike textile material, by heating a fiber material comprising reinforcing fibers and thermoplastic matrix fibers which melt at a lower temperature than the reinforcing fibers to a temperature at which the fibrous thermoplastic matrix material melts, characterized in that one or more layers of a deep-drawable textile material fabricated from yarns and comprising reinforcing fibers and a thermoplastic matrix material in fiber form which melts at a lower temperature than the reinforcing fibers are stacked one on top of the other, the stack is brought into the shape desired for the core material by an area-enlarging shaping process at a temperature at which the fibrous thermoplastic matrix material melts, so that the core material consists of a porous network of a fiber composite, then the temperature is brought back down to below the melting point of the thermoplastic matrix material and the shaped material is kept in the mold until the thermoplastic matrix material has sufficiently hardened, and then the resulting shaped textile material (1) is demolded.

2. The process of claim 1, characterized in that the deep-drawable textile material possesses a high elastic extensibility.

3. The process of at least one of claims 1 and 2, characterized in that the deep-drawable textile material is a knitted material.

4. The process of at least one of claims 1 to 3, characterized in that the deep-drawable textile material has been produced from a commingled yarn composed of matrix and reinforcing fibers.

5. The process of at least one of claims 1 to 4, characterized in that the deep-drawable textile material consists of bicomponent fibers which are composed of a high-melting and a low-melting polymer material and in which the polymer components can be present in a side-by-side arrangement or in a concentric core-sheath arrangement.

6. The process of at least one of claims 1 to 5, characterized in that the deep-drawable textile material consists of yarns composed of thermoplastic fibers and yarns composed of non-melting or high-melting reinforcing fibers, which have been cowoven or coknitted in a conventional manner.

7. The process of at least one of claims 1 to 6, characterized in that the melting point difference between the reinforcing fibers and the matrix fibers is at least 10°C, preferably at least 30°C.

8. The process of at least one of claims 1 to 7, characterized in that the reinforcing fibers and the matrix fibers consist of polyesters having different melting points.

9. The dimensionally stable, three-dimensionally shaped, sheetlike textile material manufactured by the process of claim 1, characterised in that it consists of a porous network of a fiber composite.

10. The use of the dimensionally stable, three-dimensionally shaped, sheetlike textile material manufactured by the process of claim 1, for manufacturing sheetlike sandwich structures.

## Revendications

1. Procédé de préparation d'une matière textile bidimensionnelle déformée en trois dimensions, ayant une stabilité dimensionnelle, en chauffant une matière fibreuse qui contient les fibres de renfort et les fibres de matrice thermoplastiques, dont le point de fusion est inférieur à celui des fibres de renfort, à une température à laquelle fond la matière matrice thermoplastique fibreuse, caractérisé en ce que l'on empile l'une sur l'autre une ou plusieurs couches d'une matière textile emboutissable préparée en filés qui contiennent les fibres de renfort et une matière matrice thermoplastique fibreuse, dont le point de fusion est inférieur à celui des fibres de renfort, on fait fondre l'empilage à une température à laquelle fond la matière matrice thermoplastique fibreuse, on met en forme désirée pour la matière d'âme à l'aide d'un procédé de déformation qui entraîne l'agrandissement de la surface, de sorte qu'elle se compose d'un réseau poreux d'un matériau composite fibreux, ensuite on réduit à nouveau la température au-dessous du point de fusion de la matière matrice thermoplastique et on maintient encore la matière déformée dans la forme jusqu'à ce que la matière matrice thermoplastique soit suffisamment durcie, puis on enlève la matière textile (1) déformée ainsi obtenue de l'outil.

2. Procédé selon la revendication 1, caractérisé en ce que la matière textile emboutissable présente une extensibilité élastique élevée.

3. Procédé selon au moins l'une des revendications 1 et 2, caractérisé en ce que la matière textile emboutissable est un article de bonnetterie.

4. Procédé selon au moins l'une des revendications 1 à 3, caractérisé en ce que la matière textile emboutissable est préparée à partir d'un filé mixte composé de fibres de matrice et de fibres de renfort.

5. Procédé selon au moins l'une des revendications 1 à 4, caractérisé en ce que la matière textile emboutissable est composée de fibres à deux composants qui sont constituées d'une matière polymère à haut point de fusion et d'une matière polymère à point de fusion plus faible, le composant polymère pouvant être disposé côte-à-côte ou en une disposition concentrique âme-gaine.

6. Procédé selon au moins l'une des revendications 1 à 5, caractérisé en ce que la matière textile emboutissable se compose de filés de fibres thermoplastiques et de filés de fibres de renfort infusibles ou ayant un point de fusion élevé, que l'on tisse ou tricote ensemble de façon connue en soi.

7. Procédé selon au moins l'une des revendications 1 à 6, caractérisé en ce que la différence dans les points de fusion des fibres de renfort et des fibres de matrice est d'au moins 10 °C, de préférence d'au moins 30 °C.

8. Procédé selon au moins l'une des revendications 1 à 7, caractérisé en ce que les fibres de renfort et les fibres de matrice sont composées de polyesters ayant des points de fusion différents.

9. Matière textile bidimensionnelle déformée en trois dimensions caractérisée par une stabilité dimensionnelle préparée selon le procédé selon la revendication 1, caractérisée en ce qu'elle se compose d'un réseau poreux d'un matériau composite fibreux.

10. Utilisation de la matière textile bidimensionnelle déformée en trois dimensions à stabilité dimensionnelle préparée selon le procédé selon la revendication 1 pour la préparation de corps sandwich bidimensionnels.
